# EUROPEAN PATENT APPLICATION

(11) **EP 4 145 045 A1**
(43) Date of publication of application: **08.03.2023**
(21) Application number: 21195232.0
(22) Date of filing: 07.09.2021
(51) Int. Cl.: F21V 23/04, F21V 33/00, H05B 45/10, H05B 47/105, H05B 47/11, H05B 47/115, H05B 47/18, H05B 47/19

(54) **SENSORS WITH INDICATOR LED AND TEST SWITCH**

(71) Applicant: Tridonic GmbH & Co. KG, 6851 Dornbirn (AT)
(72) Inventor: Deepak, Makwana, 6850 Dornbirn (AT); Michael, Taylor, 6850 Dornbirn (AT); Jones, Graeme, 6850 Dornbirn (AT); Carracedo Cordovilla, Luis Javier, 6850 Dornbirn (AT)
(74) Representative: Rupp, Christian

(57) **Abstract**

Disclosed is a module (1) for a luminaire (2). The module (1) comprises one or more sensing means (11); and at least one of: a visual information output means (12), and a mechanical input means (13) configured for being actuated by a human operator. The module (1) is insertable into an opening (231) of a casing (23) of the luminaire (2) such that the sensing means (11) is/are exposed to an exterior of the luminaire (2). Especially in connection with luminaires (2) for emergency lighting, which are required by law in every building, this provides a dense grid of environmental sensors (11) without requiring extra wiring or gateways to work, reduces the number of elements deployed in the building to get environmental data, simplifies integration and commissioning, and decreases installation costs with reference to separate sensor networks.

## Description

### Technical Field

The present disclosure relates to lighting technology, and in particular to a module for a luminaire, a luminaire into which such a module is insertable, a luminaire in which such a module is / has been in serted, a kit of a module and a luminaire, and a system.

### Background Art

A building management system (BMS) may refer to a system for monitoring and control of a building's power systems, fire systems, security systems, lighting, ventilation and the like systems.

An adequate level of ventilation may be driven by sensor data, as obtained by sensing of air quality. However, a sufficiently dense grid of air quality sensors requires extra wiring or gateways to work, increases the number of elements deployed in the building to obtain the required environmental data, raises questions about its own commissioning, monitoring and control, and increases installation costs.

### Summary

In view of the above-mentioned drawbacks and limitations, the present disclosure aims at integration of air quality sensing into lighting systems.

The objective is achieved by the embodiments as defined by the appended independent claims. Preferred embodiments are set forth in the dependent claims and in the following description and drawings.

A first aspect of the present disclosure relates to a module for a luminaire. The module comprises one or more sensing means; and at least one of: a visual information output means, and a mechanical input means configured for being actuated by a human operator. The module is insertable into an opening of a casing of the luminaire such that the sensing means is/are exposed to an exterior of the luminaire.

The sensing means may comprise one or more of: an air quality sensing means, a humidity sensing means, a temperature sensing means, a movement sensing means, and a brightness sensing means.

The visual information output means may comprise a status indicator configured to emit light in dependence of a status of the luminaire.

The mechanical input means may comprise one of: a pushbutton, and a switch.

The module may further comprise communication means configured to communicate with the luminaire.

The communication means may be connected to a wireless communication transmitter.

The communication means may comprise wireline communication means such as a DALI (Digital Addressable Lighting Interface) bus.

The wireline communication means may be configured to power one or more of: the sensing means, and the visual information output means.

A second aspect of the present disclosure relates to a luminaire, comprising at least one LED; a driver configured to power the at least one LED; and a casing. The casing comprises an opening configured for insertion of a module of the first aspect or any of its implementations such that sensing means of the module is/are exposed to an exterior of the luminaire.

The luminaire may comprise the wireless communication transmitter connected to the communication means.

The luminaire may further comprise a battery and be configured for emergency lighting.

The driver of the luminaire may further comprise a power supply for powering a wireline communication means connectable to the luminaire.

The driver of the luminaire may further comprise a power converter for powering the at least one LED.

The luminaire may further comprise the module of the first aspect or any of its implementations inserted in the opening.

The driver of the luminaire may further comprise a processing unit configured to communicate via the communication means of the inserted module.

The driver of the luminaire may further be responsive to a communication via the communication means of the inserted module.

A third aspect of the present disclosure relates to a kit, comprising a module of the first aspect or any of its implementations; and a luminaire of the second aspect or any of its implementations.

A fourth aspect of the present disclosure relates to a system, comprising a plurality of luminaires of the second aspect or any of its implementations configured to form a wireless mesh network for reporting of data sensed by the respective module.

The system may further comprise a wireless gateway configured to relay the reported data.

The system may further comprise a cloud computing platform configured to operate a building management system (BMS) for processing the relayed data.

The cloud computing platform may further be configured to operate a visualization platform for displaying the processed data.

### Advantageous Effects

The present disclosure provides a module which integrates environmental sensors, an indicator LED and a test switch and may be inserted into a luminaire having a designated opening for the module.

Deployment of the module especially in connection with luminaires for emergency lighting, which are required by law in every building, provides a dense grid of environmental sensors, in particular air quality sensors. The grid does not require extra wiring or gateways to work, reduces the number of elements deployed in the building to get environmental data, simplifies integration and commissioning, and decreases installation costs with reference to separate sensor networks.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: schematically illustrates an exemplary system architecture in accordance with the present disclosure;
- FIG. 2: schematically illustrates an exemplary hardware architecture of a module and a luminaire in accordance with the present disclosure;
- FIG. 3: schematically illustrates a module in accordance with the present disclosure in a most concise representation;
- FIGs. 4, 5: illustrate different views of an exemplary embodiment of the module in accordance with the present disclosure;
- FIG. 6: schematically illustrates a luminaire in accordance with the present disclosure;
- FIG. 7: schematically illustrates the luminaire of FIG. 6 with the module of FIG. 3 inserted in a designated opening; and
- FIG. 8: illustrates an exemplary embodiment of the luminaire of FIG. 7 with the module inserted.

### Detailed Descriptions of Drawings

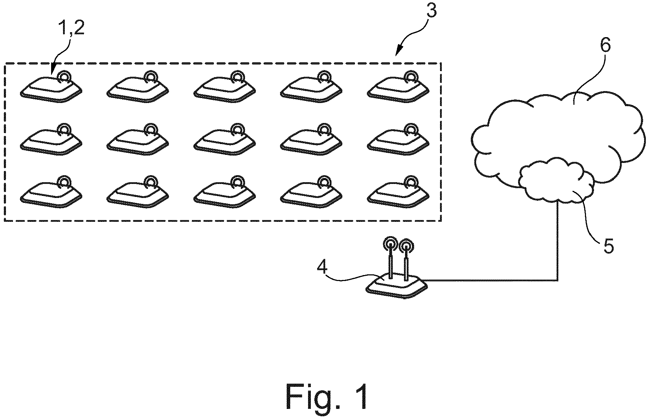

FIG. 1 schematically illustrates an exemplary system architecture in accordance with the present disclosure, by which integration of air quality and other sensing into lighting systems may be achieved.

The exemplary system may comprise a plurality of luminaires 2 of the second aspect or any of its implementations configured to form a wireless mesh network 3 for reporting data sensed by the respective module 1. The system may further comprise a wireless gateway 4 configured to relay the reported data. The system may further comprise a cloud computing platform 5 configured to operate a BMS for processing the relayed data. The cloud computing platform 5 may further be configured to operate a visualization platform 6 for displaying the processed data.

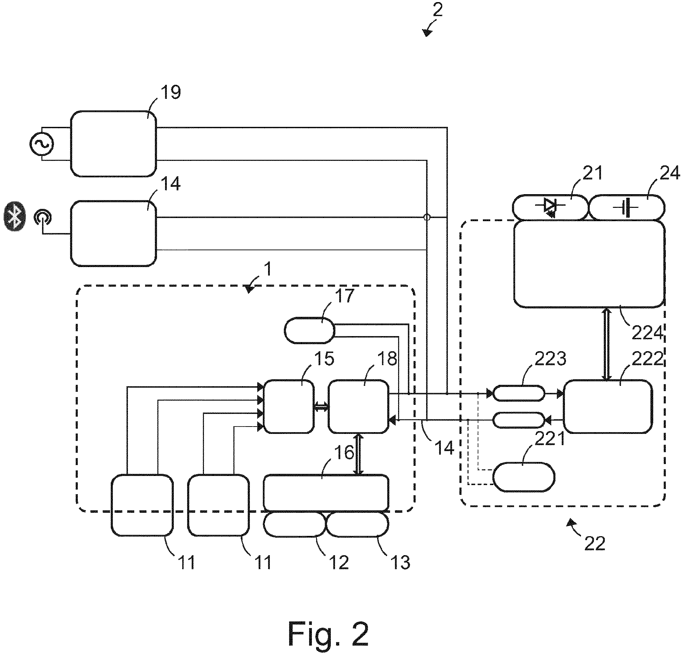

FIG. 2 schematically illustrates an exemplary hardware architecture of a module 1 and a luminaire 2 in accordance with the present disclosure.

As may be taken from FIG. 2, the module 1 and the luminaire 2 may be interconnected via communication means 14 such as - but not limited to - a wireline communication means e.g. DALI bus. Therefore hereinafter the communication means 14 is being described by the example of a DALI bus 14.

However, alternatively or additionally also wireless communication means may be used.

The DALI bus 14 may be powered by a separate DALI power supply 19 off an AC mains supply, or by a power supply 221 of a driver 22 (indicated by dashed lines) which may be configured to turn a logic supply DC voltage such as 12 V into a DC voltage such as 16 V which is suitable for the DALI bus 14. The power supply 221 may further comprise a current limiter (not shown) as an interface of the power supply 221 to the DALI bus 14, which current limiter is configured to limit a current flow on the DALI bus 14 if any gear (i.e., sensor, control or driver) connected to the DALI bus 14 communicates by briefly shorting high-side and low side rails / wires of the DALI bus 14 to a low voltage level such as 0 V. The power supply 221 may further comprise a control entity (not shown), such as an integrated circuit (IC), configured to operate the power supply 221.

The module 1 to the lower left of FIG. 2 is configured to derive its supply power from the DALI bus 14. More specifically, a low-voltage power supply 17 of the module 1 is configured to convert a DC voltage such as a 16V DC voltage of the DALI bus 14 to a lower DC voltage such as 12V which is appropriate for the various circuit components of the module 1. For instance the low-voltage power supply 17 of the module 1 may use the power provided by the communication means 14 and may supply the microcontroller 18, the sensing means 11 and / or the visual information output means 12 with power.

The module 1 is further configured to communicate to the driver 22, which may be configured for emergency lighting, via the DALI bus 14.

The module 1 comprises one or more sensing means 11 and at least one of a visual information output means 12 and a mechanical input means 13 configured for being actuated by a human operator to receive and thus sense control data. The one or more sensing means 11 is/are exposed to an exterior of the luminaire 2. The module 1 depicted in FIG. 2 further comprises an internal interface controller 15 configured to interconnect the one or more sensing means 11 and a microcontroller 18 of the module 1 via an internal digital interface 35, e.g. an Inter-IC (I²C) interface, and further comprises a test switch and indicator LED subsystem 16 providing the at least one of the visual information output means 12 and the mechanical input means 13.

The luminaire 2 of FIG. 2 comprises at least one LED 21 and the afore-mentioned driver 22 configured to power the at least one LED 21. If the driver 22 comprises an emergency LED driver, the luminaire 2 may further comprise a - preferably rechargeable - battery 24 for continued power supply of the driver 22 in case of an emergency.

In an exemplary implementation (not shown), the driver 22 may comprise a PFC AC/DC converter configured to supply an internal DC voltage such as 400V to a dual rail DC bus off (i.e., energized by) an AC mains supply, a first DC/DC power converter 224 configured to supply a load supply DC voltage to the at least one LED 21 off the DC bus; a second DC/DC converter configured to provide a logic supply DC voltage, such as 12V, off the DC bus; and the power supply 221 mentioned previously.

The driver 22 may be controlled by a processing unit (CPU) 222 of the driver 22, which CPU 222 is configured to communicate to the connected module 1 via the DALI bus 14, using a galvanic isolation provided by opto-couplers 223. In particular, the driver 22 may be responsive to a communication via the communication means 14 of the inserted module 1, such as the DALI bus 14. For example, the driver 22 may dim the at least one LED 21 in response to a level of brightness sensed by the inserted module 1, or may activate the at least one LED 21 in response to a movement sensed by the inserted module 1.

The DALI bus 14 may be connected to an external wireline digital communication network such as a DALI network, which may be part of a building management system BMS.

As a further example, the driver 22 may report air quality data sensed by the inserted module 1 to a cloud computing platform 5 (see FIG. 1) configured to operate a BMS, which may in response set an adequate level of ventilation driven by the sensed data.

FIG. 2 further shows a wireless communication transmitter 34 such as a BLE (Bluetoot Low Energy) communication transmitter, which is connected to the DALI bus 14. The wireless communication transmitter 34 may be configured to report environmental data sensed by the module 1 as well as other data as control data sensed by the module 1 to a wireless gateway 4, such as the BLE gateway mentioned in connection with FIG. 1.

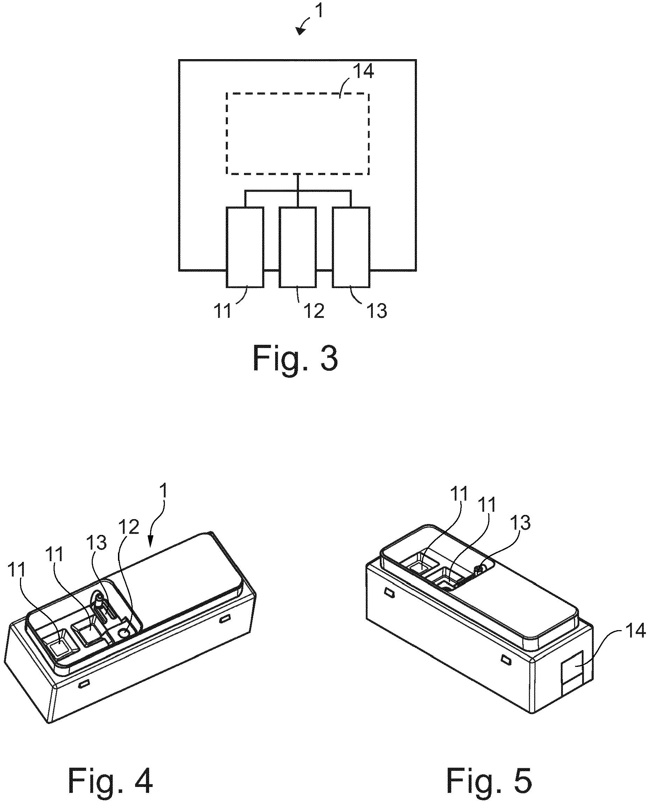

FIG. 3 schematically illustrates a module 1 in accordance with the present disclosure in a most concise representation.

The module 1 comprises one or more sensing means 11. The sensing means 11 may comprise one or more of: an air quality sensing means, such as a Volatile Organic Compounds (VOC) sensor, a humidity sensing means, a temperature sensing means, a movement sensing means, a presence sensing means and a brightness sensing means.

The module 1 further comprises at least one of: a visual information output means 12, and a mechanical input means 13 configured for being actuated by a human operator. The visual information output means 12 may comprise a status indicator configured to emit light in dependence of a status of the luminaire 2. For example, the status indicator may comprise an indicator LED. The visual information output means 12 may be for instance indicate the health status of the driver 22 or the charging status of the battery 24 or may output configuration data as for instance the address assigned to the luminaire 2 or the driver 22. The mechanical input means 13 may comprise one of: a pushbutton, and a switch which may be configured for being actuated by a human operator and thereby may be used for reception (sensing) of control data.

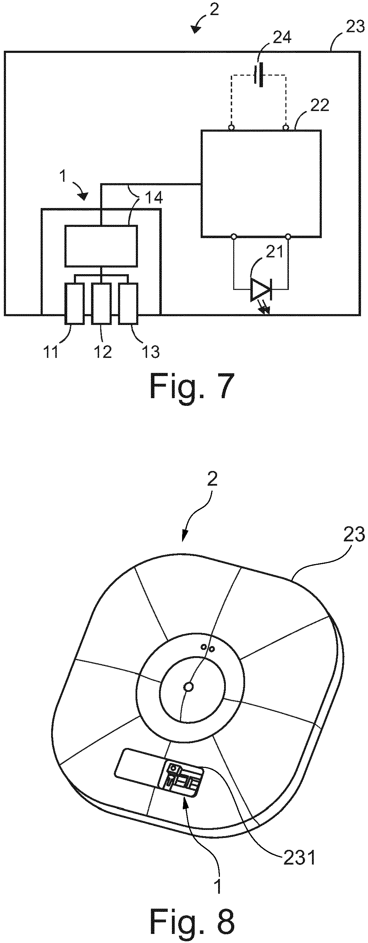

The module 1 is for a luminaire 2, as will become more apparent in connection with FIGs. 7 and 8 below. As such, the module 1 is pluggable into an opening 231 of a casing 23 of the luminaire 2 such that the sensing means 11 is/are exposed to an exterior of the luminaire 2.

The module 1 may further comprise communication means 14 configured to communicate with the luminaire 2, e.g. with the driver 22 (not shown here) inside the luminaire 2. The communication means 14 may be connected to the wireless communication transmitter 34 such as a Bluetooth Low Energy (BLE) communication interface of example of figure 2. The communication means 14 may comprise wireline communication means such as a Digital Addressable Lighting Interface (DALI) bus.

The module 1 may communicate with the luminaire 2 or its driver 22 via the DALI bus 14 as communication means. For example, the driver 22 may dim the at least one LED 21 in response to a level of brightness sensed by the inserted module 1, or may activate the at least one LED 21 in response to a movement sensed by the inserted module 1. The module 1 may also use the DALI bus 14 as a source of electrical power. More specifically, the wireline communication means 14 may further be configured to power directly or indirectly one or more of: the sensing means 11, and the visual information output means 12. As an example the wireline communication means 14 may be configured to power the sensing means 11 and the visual information output means 12 as well as the microcontroller 18 via the low-voltage power supply 17.

The DALI bus 14 may be connected to the microcontroller 18 of the module 1 (as also illustrated in FIG. 2). The microcontroller 18 may be connected via an internal digital interface 35, e.g. an Inter-IC (I²C) interface, to the sensing means 11, the visual information output means 12 and the mechanical input means 13. At least the mechanical input means 13 may be switch which may be configured to be supplied by the microcontroller 18 with a constant voltage. In case that the switch as mechanical input means 13 is being actuated by a human operator it may shortcut the voltage provided by the microcontroller 18 and such shortcutting may be detected by the microcontroller as input of control data. The microcontroller 18 may transmit the data from the sensing means 11 and the mechanical input means 13 as e.g. sensed environmental data and control data as described for the example of figure 4.

Depending on the implementation, the communication means 14 may provide the data, e.g. sensed environmental data and / or control data, via the connected wireless communication transmitter 34 and a wireless (e.g. BLE) gateway,4 or using wireline communication means 14 such as the DALI bus connected to a DALI network, and thereby to a cloud system where a customer can access the data via a graphical user interface (GUI) or integrate the data into a BMS.

FIGs. 4, 5 illustrate different views of an exemplary embodiment of the module 1 in accordance with the present disclosure.

The module 1 may have a form factor in accordance with applicable standards for interfaces of LED lighting components and corresponding sensing/communication modules. A form factor as used herein may refer to a hardware design aspect that defines and prescribes a size and shape of tangible items. For example, the form factor may be compatible with mechanical interface specifications as specified in Book 20 of the Zhaga Consortium which standardizes an interface between indoor luminaires and sensing / communication modules.

The module 1 may further include 'clip in' features in its molding for securing to corresponding features of the casing 23 of the luminaire 2.

The exemplary embodiment of FIGs. 4 and 5 comprises, without limitation, two openings (or pockets, or wells) for the sensing means 11.

As best seen in FIG. 4, the exemplary embodiment further comprises an aperture for an indicator LED or a light pipe for better visibility as the visual information output means 12, and a mechanical input means 13 configured for being actuated by a human operator. The mechanical input means 13 configured for being actuated by a human operator may be used for reception (sensing) of control data such as to initiate a self-test of the emergency function or battery status or configuration of the driver 22 such as timing data as for instance configuration of the discharge time of the battery in case of an emergency lighting case or address data. The mechanical input means 13 comprises a latch / button feature being incorporated into the molding of the module 1 which when pressed gently operates the pushbutton or switch underneath. This reduces the risks of users using a wire or pin to operate the mechanical input means 13 and possibly causing damage.

As best seen in FIG. 4, the exemplary embodiment further comprises a terminal 44 of wireline communication means 14, e.g. a DALI bus. Such a wireline communication means 14 is configured to power one or more of: the sensing means 11, and the visual information output means 12.

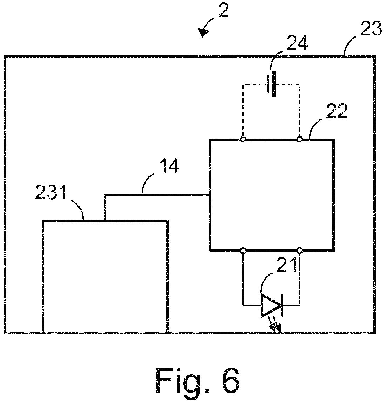

FIG. 6 schematically illustrates a luminaire 2 in accordance with the present disclosure.

The luminaire 2 comprises at least one LED 21; a driver 22 configured to power the at least one LED 21; and a casing 23. The casing 23 comprises an opening 231 configured for insertion of a module 1 of the first aspect or any of its implementations such that the one or more sensing means 11 of the module 1 is/are exposed to an exterior of the luminaire 2. Mains supply and other well-known features of the luminaire 2 are omitted for reasons of clarity.

The luminaire 2 may be configured for emergency lighting. In other words, the luminaire 2 may further comprise a - preferably rechargeable - battery 24 for continued power supply of the driver 22 and / or the communication means 14 in case of an emergency, such as a mains failure or a fire incident, for example.

Furthermore, luminaires 2 configured for emergency lighting are required by law in every building and must anyway be equipped with a visual indicator (LED) and a manually operable test switch. This is why module integration of environmental sensors 11 with a visual information output means 12 and/or a mechanical input means 13 makes particular sense for emergency lighting.

FIG. 7 schematically illustrates the luminaire 2 of FIG. 6 with the module 1 of FIG. 3 inserted in a designated opening 231.

As the form factors and features of the molding of the module 1 and the opening 231 of the casing 23 of the luminaire 2 correspond to one another, the luminaire 2 may further comprise the module 1 of the first aspect or any of its implementations inserted in the opening 231, such that the sensing means 11 of the module 1 is/are exposed to an exterior of the luminaire 2.

When inserted in the designated opening, the module 1 and the luminaire 2 may be interconnected via wireline communication means 14 such as - but not limited to - a DALI bus via terminal 44. In this case, the wireline communication means 14 comprises DALI interfaces interconnected by a pair of bus wires/rails. For example, the DALI interface 14 shown in FIG. 7 may be connected to the microcontroller 18 of the module 1 illustrated in FIG. 2. The microcontroller 18 is connected via an internal digital interface 35, e.g. an Inter-IC (I²C) interface, to the sensing means 11, the visual information output means 12 and the mechanical input means 13. The microcontroller 18 may transmit the data from the sensing means 11 and the mechanical input means 13 as e.g. sensed environmental data and control data as described before.

FIG. 8 illustrates an exemplary embodiment of the luminaire 2 of FIG. 7 with the module 1 inserted.

For example, a kit 1, 2 comprising a module 1 of the first aspect or any of its implementations and a luminaire 2 of the second aspect or any of its implementations may be assembled by inserting the module 1 (having a form factor) into the opening 231 (having a corresponding form factor) of the casing 23 of the luminaire 2 such that the sensing means 11 of the inserted module 1 is/are exposed to an exterior of the luminaire 2, as shown in FIG. 8.

A kit may generally refer to a set of items needed for a specific purpose, and as used herein may refer to a set of a luminaire and a module which may be assembled.

## Claims

1. An module (1) for a luminaire (2), comprising
one or more sensing means (11); and
at least one of
a visual information output means (12), and
a mechanical input means (13) configured for being actuated by a human operator;
the module (1) being insertable into an opening (231) of a casing (23) of the luminaire (2) such that the sensing means (11) is/are exposed to an exterior of the luminaire (2).

2. The module (1) of claim 1,
the sensing means (11) comprising one or more of
an air quality sensing means,
a humidity sensing means,
a temperature sensing means,
a movement sensing means, and
a brightness sensing means.

3. The module (1) of claim 1 or claim 2,
the visual information output means (12) comprising
a status indicator configured to emit light in dependence of a status of the luminaire (2).

4. The module (1) of any one of the preceding claims,
the mechanical input means (13) comprising one of
a pushbutton, and
a switch.

5. The module (1) of any one of the preceding claims, further comprising communication means (14) configured to communicate with the luminaire (2).

6. The module (1) of claim 5,
the communication means (14) configured to communicate with a wireless communication transmitter (34).

7. The module (1) of claim 5 or claim 6,
the communication means (14) comprising
wireline communication means.

8. The module (1) of claim 7,
the wireline communication means (14) configured to power one or more of
the sensing means (11), and
the visual information output means (12).

9. A luminaire (2), comprising
at least one LED (21);
a driver (22) configured to power the at least one LED (21); and
a casing (23), comprising
an opening (231) configured for insertion of a module (1) of any one of the claims 1 to 8 such that sensing means (11) of the module (1) is/are exposed to an exterior of the luminaire (2).

10. The luminaire (2) of claim 9, further comprising
a battery (24);
the luminaire (2) configured for emergency lighting.

11. The luminaire (2) of claim 9 or claim 10,
the driver (22) further comprising a power supply (221) for powering a wireline communication means (14) connectable to the luminaire (2).

12. The luminaire (2) of any one of the claims 9 to 11,
the driver (22) further comprising a power converter (224) for powering the at least one LED (21).

13. The luminaire (2) of any one of the claims 9 to 12, further comprising the module (1) of any one of the claims 1 to 8 inserted in the opening (231).

14. The luminaire (2) of claim 13,
the driver (22) further comprising a processing unit (222) configured to communicate via the communication means (14) of the inserted module (1) and / or the driver (22) being responsive to a communication via the communication means (14) of the inserted module (1).

15. The luminaire (2) of any one of the claims 9 to 14,
comprising the wireless communication transmitter (34) connected to the wireline communication means (14).

16. A kit (1, 2), comprising
a module (1) of any one of the claims 1 to 8; and
a luminaire (2) of any one of the claims 9 to 15.

17. A system, comprising
a plurality of luminaires (2) of any one of the claims 9 to 15 configured to form a wireless mesh network (3) for reporting data sensed by the respective module (1).

18. The system of claim 17, further comprising
a wireless gateway (4) configured to relay the reported data.

19. The system of claim 18, further comprising
a cloud computing platform (5) configured to operate a building management system (BMS) for processing the relayed data.

20. The system of claim 19,
the cloud computing platform (5) further configured to operate a visualization platform (6) for displaying the processed data.
